# EUROPÄISCHE PATENTANMELDUNG

(11) **EP 2 037 245 A1**
(43) Veröffentlichungstag der Anmeldung: **18.03.2009**
(21) Anmeldenummer: 07018196.1
(22) Anmeldetag: 17.09.2007
(51) Int. Cl.: G01K 1/08, G01K 13/02

(54) **Sensorenanordnung und Verfahren zu deren Herstellung**

(71) Anmelder: Carl Freudenberg KG, 69469 Weinheim (DE)
(72) Erfinder: Lauer, Frank, 69168 Wiesloch (DE); Röhner, Gerhard, 69502 Hemsbach (DE); Unger, Hans, 69518 Abtsteinach (DE); Ziegler, Günter, 68259 Mannheim (DE)

(57) **Zusammenfassung**

Sensoranordnung, umfassend einen Sensor (1), der auf einem Trägerteil (2) angeordnet und mit diesem verbunden ist, wobei zumindest der Sensor (1) von einer Ummantelung (3) aus elastomerem Werkstoff umschlossen ist.

## Beschreibung

### Technisches Gebiet

Die Erfindung betrifft eine Sensoranordnung, umfassend einen Sensor, der auf einem Trägerteil angeordnet und mit diesem verbunden ist.

### Stand der Technik

Es sind Sensoranordnungen bekannt, bei denen der Sensor mit einem thermoplastischen Elastomer umspritzt ist. Durch das thermoplastische Elastomer zwischen dem Sensor und dem zu messenden Medium verringert sich die Reaktionszeit des Sensors, was in vielen Anwendungsfällen nachteilig ist.

### Darstellung der Erfindung

Der Erfindung liegt die Aufgabe zu Grunde, eine Sensoranordnung und ein Verfahren zur Herstellung der Sensoranordnung der Art weiterzuentwickeln, dass die Umspritzung mit elastomerem Werkstoff die Reaktionszeit des Sensors nicht nachteilig beeinflusst und dass der Sensor gut vor äußeren Einflüssen geschützt ist. Außerdem soll die Sensoranordnung einfach und kostengünstig herstellbar sein.

Diese Aufgabe wird erfindungsgemäß mit den Merkmalen der Ansprüche 1 und 9 gelöst. Auf vorteilhafte Ausgestaltungen/Weiterbildungen nehmen die jeweils darauf rückbezogenen Unteransprüche Bezug.

Zur Lösung der Aufgabe ist eine Sensoranordnung vorgesehen, umfassend einen Sensor, der im Wesentlichen unmittelbar auf einem Trägerteil angeordnet und mit diesem verbunden ist, wobei zumindest der Sensor von einer Ummantelung aus elastomerem Werkstoff umschlossen ist. Hierbei ist von Vorteil, dass die Verbindung zwischen dem Sensor und dem Trägerteil im Wesentlichen unmittelbar erfolgt und nicht, wie im Stand der Technik, dadurch, dass ein dicker elastisch nachgiebiger Werkstoff als Klebermittel verwendet wird. Die einander zugewandten Flächen von Sensor und Trägerteil berühren einander bevorzugt unmittelbar. Die Ummantelung überdeckt den Sensor nur auf der dem Trägerteil abgewandten Seite und aussenumfangsseitig, so dass alle freien Oberflächen des Sensors von der schützenden Ummantelung aus elastomerem Werkstoff bedeckt sind. Dadurch, dass sich die einander zugewandten Oberflächen des Sensors und des Trägerteils unmittelbar anliegend berühren, sind die Reaktionszeiten des Sensors bei sich verändernden Messwerten auf ein Minimum begrenzt, da die Übertragung der Messwerte vom Trägerteil auf den Sensor auf kürzestem Weg erfolgt.

Die Sensoranordnung wird dadurch hergestellt, dass in einem ersten Verfahrenschritt eine vormontierbare Einheit, bestehend aus Sensor und Trägerteil hergestellt und in ein Elastomerwerkzeug eingelegt wird, wobei die vormontierbare Einheit durch zumindest einen Haltepunkt darin fixiert wird. Der zumindest eine Haltepunkt sorgt dafür, dass die vormontierbare Einheit exakt im Elastomerwerkzeug aufgenommen wird und sich während des Einspritzens von elastomerem Werkstoff nicht unerwünscht verlagert. Diese exakte Positionierung der vormontierbare Einheit innerhalb des Elastomerwerkzeugs ist die Voraussetzung dafür, dass die Dicke der Ummantelung auf ein Minimum reduziert werden kann und diese dünne Ummantelung dennoch prozesssicher herstellbar ist.

Die Verbindung von Sensor und Trägerteil kann kraft-und/oder form-und/oder stoffschlüssig erfolgen.
Eine kraftschlüssige Verbindung kann beispielsweise dadurch vorgenommen werden, dass der Sensor in Haltekrallen, die den Sensor unter elastischer Vorspannung umschließen, eingeklemmt ist. Durch die Klemmkraft wird der Sensor auf dem Trägerteil gehalten.
Eine formschlüssige Verbindung kann beispielsweise dadurch hergestellt werden, dass der Sensor oder das Trägerteil Rastnasen aufweisen, die ihn kongruent gestalteter Ausnehmung in von Trägerteil oder Sensor einschnappbar sind.
Stoffschlüssige Verbindungen können durch eine Verschweißung oder Verklebung von Sensor und Trägerteil erzeugt werden.

Um das Handling während der Herstellung der Sensoranordnung zu vereinfachen, ist von Vorteil, wenn der Sensor und das Trägerteil eine vormontierbare Einheit bilden. Die vormontierbare Einheit ist auch für die Montage der Sensoranordnung in ihren Einbauraum von Vorteil. Die Gefahr von Montagefehlem ist dadurch auf ein Minimum reduziert.

Zur weiteren Reduzierung der Reaktionszeiten des Sensors bei Änderungen des Messwerts kann es vorgesehen sein, dass das Trägerteil zur unmittelbaren Erfassung des zu sensierenden Wertes einen blanken, nicht von der Ummantelung überdeckten Kontaktbereich aufweist. Der Kontaktbereich kann dadurch unmittelbar mit dem Medium beaufschlagt werden, dessen Eigenschaften sensiert werden sollen. Ist der Sensor z.B. als Temperatursensor ausgebildet, befindet sich der blanke Kontaktbereich beispielsweise in einem Luftstrom, dessen Temperatur sensiert werden soll. Auch geringe Temperaturänderungen werden dadurch sehr rasch erfasst und mittels des Sensors an eine Auswertete-Einheit übertragen.

Der Sensor und das Trägerteil können, mit Ausnahme des blanken Kontaktbereichs, im Wesentlichen vollständig von der Ummantelung überdeckt sein. Die Sensoranordnung ist dadurch sehr gut vor äußeren Einflüssen geschützt, beispielsweise vor unerwünschter Feuchtigkeit und/oder vor unerwünschten mechanischen Belastungen.

Das Trägerteil kann als Trägerblech ausgebildet sein. Trägerbleche haben den Vorteil, dass sie beispielsweise gute Wärmeleiter und/oder gute elektrische Leiter sind. Außerdem sind Trägerbleche leicht umformbar und praktisch in beliebigen Abmessungen und/oder Formen einfach und kostengünstig herstellbar.

Der Sensor kann als Temperatursensor ausgebildet sein. Temperatursensoren kommen in der Technik häufig zur Anwendung, um die Temperatur von flüssigen oder gasförmigen Medien zu messen. Sensoranordnungen, die einen Temperatursensor umfassen, befinden sich dazu häufig in dem Medium, dessen Temperatur sensiert werden soll. Durch die Ummantelung ist der empfindliche Sensor vor dem Medium geschützt, von dem er umströmt ist.

Hergestellt wird die Sensoranordnung durch einen ersten Verfahrensschritt, indem die vormontierbare Einheit, bestehend aus Sensor und Trägerteil in ein Elastomerwerkzeug eingelegt und durch zumindest einen Haltepunkt darin fixiert wird. In einem weiteren Verfahrensschritt kann die Einheit vollständig oder mit Ausnahme des Kontaktbereichs des Trägerteils mit elastomerem Werkstoff umspritzt werden.
Alternativ kann in einem zweiten Verfahrensschritt die Einheit mit einem eine Haltegeometrie in der Ummantelung erzeugenden Formgebungswerkzeug in das Elastomerwerkzeug eingelegt und vollständig oder mit Ausnahme des Kontaktbereichs des Trägerteils mit elastomeren Werkstoff umspritzt werden. Hierbei ist von Vorteil, dass im zweiten Verfahrensschritt nicht nur die Ummantelung erzeugt wird, sondern dass außerdem in diesem Verfahrensschritt auch eine Haltegeometrie in der Ummantelung erzeugt wird.

Die Haltegeometrie in der Ummantelung kann genutzt werden, um die Sensoranordnung beispielsweise mit einem Halteflansch zu verbinden, der in die Haltegeometrie der Ummantelung eingreift und die Befestigung der Sensoranordnung an einem weiteren Maschinenelement ermöglicht.

Abhängig von den jeweiligen Gegebenheiten des Anwendungsfalles kann es vorgesehen sein, dass der zumindest eine Haltepunkt der Einheit in einem dritten Verfahrensschritt mit elastomeren Werkstoff überdeckt wird. Die Haltepunkte sind im Anschluss an den zweiten Verfahrensschritt noch offen vorhanden, da die vormontierbare Einheit mittels dieser Haltepunkte im Elastomerwerkzeug gehalten wird, und zwar während des Einspritzens des elastomeren Werkstoffs bis zu dessen Verfestigung. Für Anwendungsfälle, in denen eine vollständig Ummantelung und deshalb auch eine Überdeckung der Haltepunkte mit elastomerem Werkstoff erforderlich ist, ist der beschriebene dritte Verfahrenschritt erforderlich.

### Kurzbeschreibung der Zeichnung

Zwei Ausführungsbeispiele werden nachfolgend näher beschrieben. Diese zeigen:
- Figur 1: ein erstes Ausführungsbeispiel der erfindungsgemäßen Sensoranordnung,
- Figur 2: die vormontierbare Einheit aus Figur 1 in einer Vorderansicht vor der Umspritzung mit elastomerem Werkstoff,
- Figur 3: die vormontierbare Einheit aus Figur 2 in einer Seitenansicht von rechts,
- Figur 4: eine perspektivische Darstellung des Trägerteils,
- Figur 5: ein zweites Ausführungsbeispiel der erfindungsgemäßen Sensoranordnung, bei dem eine Haltegeometrie für einen Halteflansch in der Ummantelung angeordnet ist.

### Ausführung der Erfindung

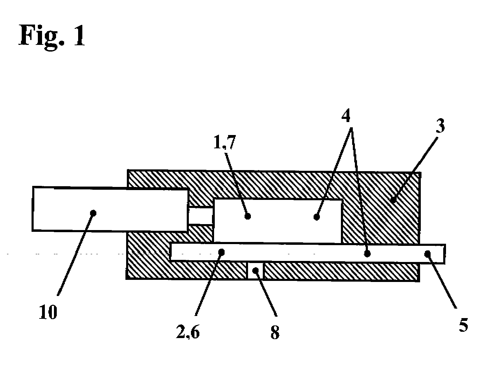

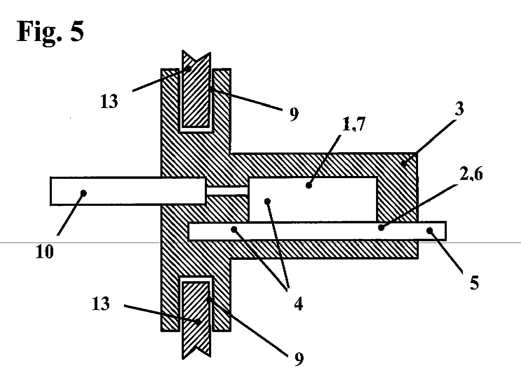

In den Figuren 1 bis 4 ist ein erstes Ausführungsbeispiel der erfindungsgemäßen Sensoranordnung gezeigt ,
In Figur 1 ist die Sensoranordnung im gebrauchsfertigen Zustand dargestellt. Die Sensoranordnung umfasst den Sensor 1, der unmittelbar auf dem Trägerteil 2 angeordnet ist. Das Trägerteil 2 ist als Trägerblech 6 ausgebildet und weist dadurch eine gute Wärmeleitfähigkeit und eine gute elektrische Leitfähigkeit auf. Im hier gezeigten Ausführungsbeispiel ist der Sensor 1 als Temperatursensor 7 ausgebildet und mittels eines Kabels 10 mit einer hier nicht dargestellten Auswerte-Elektronik verbunden. Das Kabel 10, das elektrisch leitend mit dem Sensor 1 verbunden ist, bildet ebenfalls einen Bestandteil der vormontierbaren Einheit 4.
Die Ummantelung 3 besteht aus einem elastomeren Werkstoff und umschließt die vormontierbare Einheit 4, bestehend aus Sensor 1 und Trägerteil 2, vollständig, mit Ausnahme des Haltepunkts 8 und des Kontaktbereichs 5. Mittels des Haltepunkts 8 wird die vormontierbare Einheit 4 in einem Elastomerwerkzeug fixiert. Für Anwendungsfälle, in denen der Haltepunkt 8 während der bestimmungsgemäßen Verwendung durch elastomeren Werkstoff verschlossen sein muss, wird der Haltepunkt 8 in einem zusätzlichen Verfahrensschritt, nachdem die Ummantelung 3 hergestellt wurde, durch Einspritzen von elastomeren Werkstoff verschlossen, wie in Figur 5 dargestellt.

Der Sensor 1 und das Trägerteil 2 sind unmittelbar miteinander verbunden, wobei sich in einem solchen Fall die einander zugewandten Oberflächen von Sensor 1 und Trägerteil 2 unmittelbar anliegend berühren.
Sensor 1 und Trägerteil 2 können einander aber auch mit geringem Abstand benachbart zugeordnet sein, wobei innerhalb des geringen Abstands eine dünne Schicht des elastomeren Werkstoffs der Ummantelung 3 angeordnet ist.

Dadurch, dass die Schicht nur sehr dünn ist, hat sie auch nur einen geringen Einfluss auf die Messgenauigkeit, der zumeist vernachlässigbar ist.

Das Trägerteil 2 weist einen Kontaktbereich 5 auf, der blank, das heißt nicht von elastomerem Werkstoff der Ummantelung 3 überdeckt ist Die Sensoranordnung spricht dadurch besonders sensibel auf Änderungen des zu sensierenden Messwerts an.

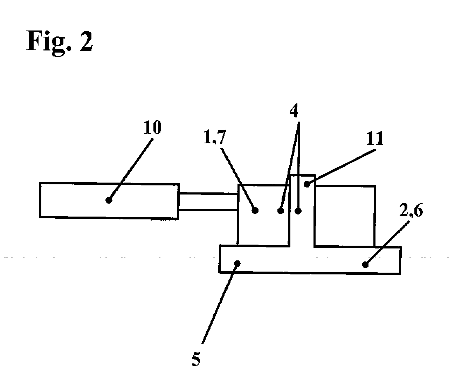

In Figur 2 ist die vormontierbare Einheit 4, bestehend aus Sensor 1 und Trägerteil 2, gezeigt. Das Trägerteil 2, das als Trägerblech 6 ausgebildet ist, weist zwei Haltekrallen 11,12 auf, die den Sensor 1 aussenumfangsseitig umschließen und dadurch die Lage von Sensor 1 und Trägerteil 2 zueinander fixieren; eine unerwünschte Verschiebung der beiden Teile zueinander während der Umspritzung mit elastomerem Werkstoff ist dadurch ausgeschlossen. Die genaue und zuverlässige Fixierung von Sensor 1 und Trägerteil 2 relativ zueinander ermöglicht es, die vormontierbare Einheit 4, wie zuvor beschrieben, prozesssicher herzustellen.

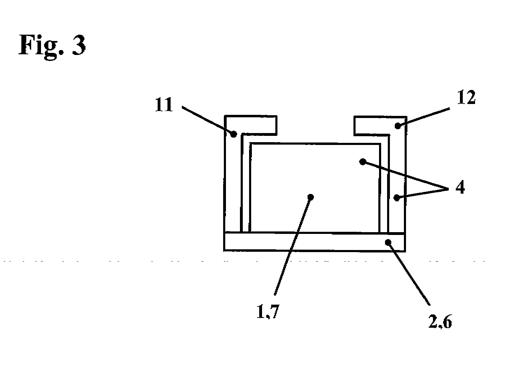

In Figur 3 ist die vormontierbare Einheit 4 aus Figur 2 in einer Ansicht von rechts gezeigt. Es ist zu erkennen, wie die Haltekrallen 11,12 des Trägerteils 2 den Sensor 1 umschließen.

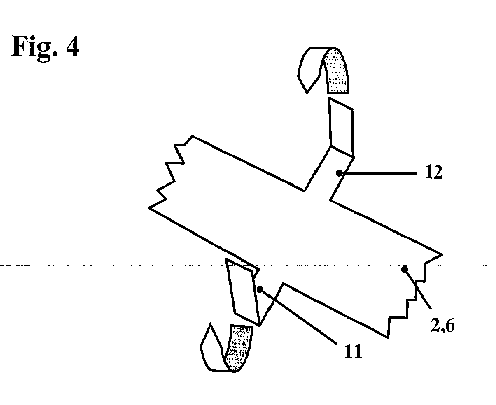

In Figur 4 ist das Trägerteil 2/Trägerblech 6 vor seiner Verbindung mit dem Sensor 1 perspektivisch dargestellt. Nachdem der Sensor 1 auf das Trägerteil 2/Trägerblech 6 aufgelegt ist, werden die Haltekralle 11,12 um den Sensor 1 gebogen, so dass sich in diesem Beispiel eine kraftschlüssige Verbindung zwischen den Teilen 1, 2 ergibt. Davon abweichend sind auch form- oder stoffschlüssige Verbindungen möglich.

In Figur 5 ist ein zweites Ausführungsbeispiel der erfindungsgemäßen Sensoranordnung gezeigt, das sich von dem Ausführungsbeispiel aus Figur 1 dadurch unterscheidet, dass die Haltepunkte 8 nach dem Spritzen der Ummantelung 3 ebenfalls durch Einspritzen von elastomerem Werkstoff verschlossen wurden. Dadurch ist diese Sensoranordnung besonders gut vor nachteiligen äußeren Einflüssen geschützt. Die Ummantelung 3 weist in diesem Ausführungsbeispiel eine Haltegeometrie 9 auf, in der beispielsweise ein Halteflansch 13 eines Gehäuses aufgenommen ist. Durch die integration der Haltegeometrie 9 in die Ummantelung 3 kann eine Verbindung der Sensoranordnung mit einem Gehäuse besonders einfach und kostengünstig hergestellt werden.
Auch in diesem Ausführungsbeispiel weist das Trägerteil 2 einen blanken Kontaktbereich 5 für das zu sensierende Medium auf, der nicht vom elastomeren Werkstoff der Ummantelung 3 überdeckt ist.

## Patentansprüche

1. Sensoranordnung, umfassend einen Sensor (1), der im Wesentlichen unmittelbar auf einem Trägerteil (2) angeordnet und mit diesem verbunden ist, wobei zumindest der Sensor (1) von einer Ummantelung (3) aus elastomerem Werkstoff umschlossen ist.

2. Sensoranordnung nach Anspruch 1, **dadurch gekennzeichnet, dass** der Sensor (1) und das Trägerteil (2) unmittelbar miteinander verbunden sind.

3. Sensoranordnung nach einem der Ansprüche 1 oder 2, **dadurch gekennzeichnet, dass** die Verbindung von Sensor (1) und Trägerteil (2) kraft- und/oder form- und/oder stoffschlüssig ist.

4. Sensoranordnung nach einem der Ansprüche 1 bis 3, **dadurch gekennzeichnet, dass** der Sensor (1) und das Trägerteil (2) eine vormontierbare Einheit (4) bilden.

5. Sensoranordnung nach einem der Ansprüche 1 bis 4, **dadurch gekennzeichnet, dass** das Trägerteil (2) zur unmittelbaren Erfassung des zu sensierenden Wertes einen blanken, nicht von der Ummantelung (3) überdeckten Kontaktbereich (5) aufweist.

6. Sensoranordnung nach einem der Ansprüche 1 bis 5, **dadurch gekennzeichnet, dass** der Sensor (1) und das Trägerteil (2), mit Ausnahme des blanken Kontaktbereichs (5), im wesentlichen vollständig von der Ummantelung (3) überdeckt sind.

7. Sensoranordnung nach einem der Ansprüche 1 bis 6, **dadurch gekennzeichnet, dass** das Trägerteil (2) als Trägerblech (6) ausgebildet ist.

8. Sensoranordnung nach einem der Ansprüche 1 bis 6, **dadurch gekennzeichnet, dass** der Sensor (1) als Temperatursensor (7) ausgebildet ist.

9. Verfahren zur Herstellung einer Sensoranordnung nach einem der Ansprüche 1 bis 8, wobei in einem ersten Verfahrenschritt die vormontierbare Einheit (4), bestehend aus Sensor (1) und Trägerteil (2), in ein Elastomerwerkzeug eingelegt und durch zumindest einen Haltepunkt (8) darin fixiert wird.

10. Verfahren zur Herstellung einer Sensoranordnung nach Anspruch 9, **dadurch gekennzeichnet, dass** in einem zweiten Verfahrenschritt die Einheit (4) vollständig oder mit Ausnahme des Kontaktbereichs (5) des Trägerteils (2) mit elastomerem Werkstoff umspritzt wird.

11. Verfahren zur Herstellung einer Sensoranordnung nach Anspruch 9, **dadurch gekennzeichnet, dass** in einem zweiten Verfahrenschritt die Einheit (4) mit einem eine Haltegeometrie (9) in der Ummantelung (3) erzeugenden Formgebungswerkzeug in das Elastomerwerkzeug eingelegt und vollständig oder mit Ausnahme des Kontaktbereichs (5) des Trägerteils (2) mit elastomerem Werkstoff umspritzt wird.

12. Verfahren zur Herstellung einer Sensoranordnung nach einem der Ansprüche 9 bis 11, **dadurch gekennzeichnet, dass** der zumindest eine Haltepunkt (8) der Einheit (4) in einem dritten Verfahrenschritt mit elastomerem Werkstoff überdeckt wird.

## Geänderte Patentansprüche

### Geänderte Patentansprüche gemäss Regel 137(2) EPÜ.

1. Sensoranordnung, umfassend einen Sensor (1), der im Wesentlichen unmittelbar auf einem Trägerteil (2) angeordnet und mit diesem verbunden ist, wobei zumindest der Sensor (1) von einer Ummantelung (3) aus elastomerem Werkstoff umschlossen ist, **dadurch gekennzeichnet, dass** die Ummantelung (3) eine Haltegeometrie (9) zur Befestigung der Sensoranordnung an einem Halteflansch (13) aufweist.

2. Sensoranordnung nach Anspruch 1, **dadurch gekennzeichnet, dass** der Sensor (1) und das Trägerteil (2) unmittelbar miteinander verbunden sind.

3. Sensoranordnung nach einem der Ansprüche 1 oder 2, **dadurch gekennzeichnet, dass** die Verbindung von Sensor (1) und Trägerteil (2) kraft- und/oder form- und/oder stoffschlüssig ist.

4. Sensoranordnung nach einem der Ansprüche 1 bis 3, **dadurch gekennzeichnet, dass** der Sensor (1) und das Trägerteil (2) eine vormontierbare Einheit (4) bilden.

5. Sensoranordnung nach einem der Ansprüche 1 bis 4, **dadurch gekennzeichnet, dass** das Trägerteil (2) zur unmittelbaren Erfassung des zu sensierenden Wertes einen blanken, nicht von der Ummantelung (3) überdeckten Kontaktbereich (5) aufweist.

6. Sensoranordnung nach einem der Ansprüche 1 bis 5, **dadurch gekennzeichnet, dass** der Sensor (1) und das Trägerteil (2), mit Ausnahme des blanken Kontaktbereichs (5), im wesentlichen vollständig von der Ummantelung (3) überdeckt sind.

7. Sensoranordnung nach einem der Ansprüche 1 bis 6, **dadurch gekennzeichnet, dass** das Trägerteil (2) als Trägerblech (6) ausgebildet ist.

8. Sensoranordnung nach einem der Ansprüche 1 bis 6, **dadurch gekennzeichnet, dass** der Sensor (1) als Temperatursensor (7) ausgebildet ist.

9. Verfahren zur Herstellung einer Sensoranordnung nach einem der Ansprüche 4 bis 8, wobei in einem ersten Verfahrenschritt die vormontierbare Einheit (4), bestehend aus Sensor (1) und Trägerteil (2), in ein Elastomerwerkzeug eingelegt und durch zumindest einen Haltepunkt (8) darin fixiert wird, **dadurch gekennzeichnet, dass** in einem zweiten Verfahrenschritt die Einheit (4) mit einem eine Haltegeometrie (9) in der Ummantelung (3) erzeugenden Formgebungswerkzeug in das Elastomerwerkzeug eingelegt und vollständig oder mit Ausnahme des Kontaktbereichs (5) des Trägerteils (2) mit elastomerem Werkstoff umspritzt wird.

10. Verfahren zur Herstellung einer Sensoranordnung nach Anspruch 9, **dadurch gekennzeichnet, dass** der zumindest eine Haltepunkt (8) der Einheit (4) in einem dritten Verfahrenschritt mit elastomerem Werkstoff überdeckt wird.
